**Europäisches Patentamt**

**European Patent Office**

**Office européen des brevets**

(11) Veröffentlichungsnummer: **0 211 405**
**B1**

## (12) EUROPÄISCHE PATENTSCHRIFT

(45) Veröffentlichungstag der Patentschrift:
**30.05.90**

(21) Anmeldenummer: **86110574.0**

(22) Anmeldetag: **31.07.86**

(51) Int. Cl.⁵: **F24F 3/16**

(54) **Klimagerät mit einem Gebläse.**

(30) Priorität: **09.08.85 DE 3528590**

(43) Veröffentlichungstag der Anmeldung:
**25.02.87 Patentblatt 87/9**

(45) Bekanntmachung des Hinweises auf die Patenterteilung:
**30.05.90 Patentblatt 90/22**

(84) Benannte Vertragsstaaten:
**AT BE CH DE FR GB IT LI NL SE**

(56) Entgegenhaltungen:
**EP-A- 0 092 742**
**DE-A- 2 319 357**

(73) Patentinhaber: **Keesmann, Till, Bahnhofstrasse 53 A,**
**D-6900 Heidelberg(DE)**

(72) Erfinder: **Keesmann, Till, Bahnhofstrasse 53 A,**
**D-6900 Heidelberg(DE)**

(74) Vertreter: **Hach, Hans Karl, Dr., Tarunstrasse 23,**
**D-6950 Mosbach-Waldstadt(DE)**

## Beschreibung

Die Erfindung betrifft ein Klimagerät mit einem Gebläse, mit einem Ionengenerator, dessen Generatorelement auf der Druckseite des Gebläses angeordnet ist.

Bei einem aus der DE-OS 2 920 813 vorbekannten Klimagerät dieser Art werden durch Spitzenentladung am negativ vorgespannten Generatorelement negative Ionen erzeugt. Die negativ geladenen Ionen werden von der angetriebenen Luftströmung mitgerissen. Durch die negativen Ionen wird das Klima verbessert. Personen, die sich in mit negativen Ionen angereicherter Atemluft aufhalten, empfinden Frische und erfahren Anregung und andere vorteilhafte Empfindungen, zum Beispiel erhöhte Wachsamkeit, gesteigertes Wohlbefinden und gesteigerte Konzentrationsfähigkeit.

Bei dem eingangs beschriebenen, bekannten Klimagerät ist das Generatorelement eine Metallspitze, an der die Spitzenentladung stattfindet. Diese Spitzenentladung erfolgt impulsartig. Aufgabe der Erfindung ist es den gleichmäßigen Ionenstrom für eine möglichst gleichmäßige Ionisierung der geförderten Luft zu erzielen.

Die Erfindung ist dadurch gekennzeichnet, daß das Generatorelement elektrisch leitende Fasern aufweist, die büschelartig einzeln längs nebeneinander angeordnet sind, daß die Fasern eines Büschels in einer gemeinsamen freiliegenden Stirnfläche enden und daß die Ionisation nach Art einer Spitzenentladung von diesen Faserenden ausgeht.

Ein solches Generatorelement induziert einen gleichmäßigen Ionenstrom. Das wird begünstigt, wenn die Fasern möglichst dünn sind, vorzugsweise derart, daß 10.000 bis 500.000, vorzugsweise etwa 100.000, Faserenden beziehungsweise -spitzen pro Quadratzentimeter in der Stirnfläche angeordnet sind.

Bei einem solchen Ionisierelement sind die Fasern dicht an dicht, weitgehend parallel zueinander und im Bündel zu mehreren hundert bis vielen tausend Fasern in eine Trägersubstanz, vorzugsweise hitzebeständigen, elektrisch isolierenden Kunststoff oder Keramik, eingebettet. Die Enden dieser Fasern sind abgeschnitten und ragen an der Stirnfläche, die die Oberfläche des Ionisierelementes bildet und die mit dem zu ionisierenden Gas in direkten Kontakt gerät, aus dem Trägerstoff heraus. Sie bilden so eine Vielzahl von Spitzen, an denen Spitzenentladung stattfinden kann. Die Enden der Fasern, die aus dem Trägerstoff herausragen, sind im Interesse der Spitzenentladung vorzugsweise nicht unmittelbar in elektrischem Kontakt miteinander, sie sind allerdings an den gleichen elektrischen Hochspannungspol angeschlossen, und zwar über ein längeres Stück der jeweils betreffenden Faser.

Solche Ionisierelemente sind auch deshalb vorteilhaft, weil auf der ganzen Flächenausdehnung der Faserspitzen diese in intensivem Kontakt mit dem vorbeiströmenden, zu ionisierenden Gas geraten.

Die Fasern bestehen vorzugsweise aus polykristallinem, einphasigem oder mehrphasigem Kohlenstoff oder aus Kohlenstoff mit graphitähnlicher Struktur. Es sind inzwischen Kunststoff und auch Keramikmaterialien bekanntgeworden, aus denen sich feine Fasern herstellen lassen, die elektrisch leitend sind. Auch Fasern aus solchen Materialien sind für Ionisierelemente geeignet.

Vorzugsweise sind die Fasern, mit Ausnahme der für den Ionisierungskontakt und der elektrischen Anschlüsse erforderlichen Flächen in temperaturbeständigen elektrisch isolierenden Trägersubstanz, vorzugsweise Kunststoff eingebettet.

Die erzeugten Ionen werden mit dem nach der Erfindung ausgestalteten Ionisierelement schnell abtransportiert und behindern die Erzeugung nachfolgender Ionen nicht. Das kann man noch durch entsprechende Anordnung und Ausgestaltung des Ionisierelementes begünstigen.

Für ein gesundes Klima ist auch eine staubfreie Luft wünschenswert. Eine dementsprechende Weiterbildung ist dadurch gekennzeichnet, daß eine gegenüber dem Generatorelement elektrisch gegenpolig vorgespannte Elektrode, im vom Gebläse angetriebenen Luftstrom angeordnet ist, daß die Elektrode zuströmseitig vom Generatorelement angeordnet ist und daß die Elektrode als Staubabscheider ausgebildet ist und über den ganzen Strömungsquerschnitt verteilt angeordnete Metallelemente aufweist, die, die Strömung möglichst wenig behindernd ausgebildet sind.

Diese Weiterbildung macht sich den Umstand zunutze, daß durch die zur Klimaverbesserung an die Luft abgegebenen Ionen auch Staubteilchen elektrisch geladen werden, indem sich diese Ionen an den Staubteilchen anlagern. Geraten diese Staubteilchen nun in die angesaugte Luft des Gebläses, dann schlagen sie sich infolge ihrer Aufladung an dem entsprechend vorgespannten Staubabscheider nieder. Das kann man noch begünstigen, wenn man die angesaugte Luft ionisiert. Eine dementsprechende Weiterbildung ist dadurch gekennzeichnet, daß ein zweites Generatorelement vorgesehen ist, daß das zweite Generatorelement zuströmseitig vom Staubabscheider angeordnet ist, daß das zweite Generatorelement elektrisch genauso gepolt ist wie das erste Generatorelement und daß die für die Ionisierung aktiven Teile des zweiten Generatorelementes aus polykristallinen, einphasigen Kohlenstoff-Fasern bestehen.

Der Staubabscheider muß eine möglichst große Abscheidefläche bieten und auf der anderen Seite soll er die Strömung möglichst wenig behindern. Dem trägt eine Ausgestaltung der Erfindung Rechnung, die dadurch gekennzeichnet ist, daß der Staubabscheider als Gitter ausgebildet ist, dessen Gitterstäbe flache Streifen sind, die mit ihrer Schmalseite gegen die Strömung gerichtet angeordnet sind.

Der Staubabscheider kann auch aus Kunststoff bestehen und mit Metall beschichtet sein. Die Beschichtung kann aus Metallfolien oder aus Metallwolle bestehen. Die Metallbeschichtung kann auch zusätzlich mit Aktivkohle beschichtet sein.

Man kann die Ionisierung der Luft erzielen, indem man Elektronen an die Luft abgibt, die sich dann an atomaren oder molekularen Teilchen anlagern und diese ionisieren. In einem solchen Fall werden nur die erwünschten negativen Ionen erzeugt und es entstehen keine unerwünschten positiven Ionen wie bei der Dissoziierung. Betreibt man ein Klimagerät nach der Erfindung mit dissoziierender Ionenerzeugung, dann sollten die positiven Ionen, die für die Klimabildung unerwünscht sind, ausgesondert werden und das geschieht vorteilhaft dadurch, daß der druckseitige Strömungskanal in ein Metallrohr eingefaßt ist, das als Elektrode ausgebildet ist, und gegenüber dem Generatorelement elektrisch gegenpolig vorgespannt ist, und daß am druckseitigen Ende des Rohres ein mit dem Rohr elektrisch leitendes verbundenes Metallgitter angeordnet ist, das die Strömung möglichst wenig behindert.

Vorzugsweise wird als Gebläse ein Axialgebläse verwendet. Wenn man jedoch eine Umlenkung der Strömung wünscht, ist die Erfindung auch mit einem Radialgebläse oder einem Tangentialgebläse zu verwirklichen.

Klimageräte nach der Erfindung können Einsatz finden im Wohn- und Arbeitsbereich, sowie bie Labor- und Klinikeinrichtungen als auch in Kraftfahrzeugen. Die Klimageräte können als handliche Kleingeräte auf einem Schreibtisch Platz finden oder aber auf dem Armaturenbrett oder vor der Heckscheibe eines Kraftfahrzeuges. Die Erfindung ist auch anwendbar in vorhandenen Klimaanlagen von Gebäuden und Fahrzeugen beispielsweise in der Belüftungsanlage am Armaturenbrett eine Kraftfahrzeuges, derart daß die Ausblasseite auf den Fahrgastraum gerichtet ist und Filtrierung und Ionisierung der eingezogenen Außenluft stattfindet.

Die Anordnung des Ionengenerators kombiniert man zweckmäßig mechanisch und elektrisch mit dem Antriebsmotor für das Gebläse. Das kann derart geschehen, daß der Antriebsmotor des Gebläses mit zur Druckseite weisendem Stator angeordnet ist, daß der Ionengenerator und das Generatorelement am Stator befestigt ist, und daß die Stormversorgung für den Ionengenerator von der Stromversorgung des Antriebsmotors abgezweigt wird. In diesem Fall ist der Generator und das Generatorelement stationär wie der Stator.

Eine andere Ausführungsform ist dadurch gekennzeichnet, daß der Antriebsmotor des Gebläses mit zur Sogseite weisendem Stator angeordnet ist, daß der Ionengenerator und das Generatorelement am Rotor befestigt ist, und daß die Stromversorgung für den Ionengenerator induktiv über am Rotor angeordnete Induktionsspulen von den Induktionsspulen des Stators abgenommen wird. In diesem Fall dreht sich der Generator und das Generatorelement mit dem Rotor und damit mit dem Lüfterrad.

Das Generatorelement kann im Falle eines stationären Generators oder im Falle eines mitlaufenden Generatorelementes die Form eines Ringes haben, der koaxial zur Gebläseachse angeordnet ist und dessen Radius etwa so groß ist wie der Radius für den mittleren Radialbereich der Gebläseschaufeln.

Der Ring muß nicht ein geschlossener Ring sein, zum Beispiel im Fall der dissoziierenden Ionenerzeugung kann der Ring aus einer Vielzahl von ringförmig angeordneten Entladungsspitzen bestehen. Im Falle des mitlaufenden Generatorelementes empfiehlt sich eine Ausgestaltung, die dadurch gekennzeichnet ist, daß die Gebläseschaufeln durch Beschichtung als Generatorelement ausgebildet sind. Diese Ausgestaltung ist deshalb besonders vorteilhaft, weil das Generatorelement durch die umlaufenden Schaufeln in intensivem Kontakt mit der angetriebenen Luftströmung gerät und dadurch intensiver wirksam sein kann.

Vorzugsweise bestehen die für die Ionisierung aktiven Teile des Generatorelementes aus polykristallinen, einphasigen Kohlenstoff-Fasern. Das Generatorelement ist dann an einen Hochspannungspol einer mit hohem Innenwiderstand ausgestatteten Hochspannungsquelle angeschlossen, so daß der hohe Innenwiderstand und dazu unachtsame Berührungen und so weiter nicht zu elektrischen Schlägen führen können. Ein Generatorelement aus polykristallinen, einphasigen Kohlenstoff-Fasern liefert einen gleichmäßigen Ionenstrom im Gegensatz zu bekannten Spitzenentladungen an einer einzigen Metallspitze, die impulsartig erfolgen. Der gleichmäßige Ionenstrom ist für eine gleichmäßige Ionisierung der Luft wünschenswert.

Für grobe Staubteilchen empfiehlt es sich, ein sich über den Querschnitt der angetriebenen Strömung erstreckendes Staubfilter aus porösem Material vorzusehen, das anströmseitig vom Staubabscheider angeordnet ist. Auf diese Weise wird verhindert, daß sich der Staubabscheider zu schnell vollsetzt.

Ein solches Staubfilter kann auch Teilchen aus Aktivkohle als Filterelemente enthalten. Es kann aus Kunststoff zum Beispiel einem Kunststoff-Fasergewirk oder aus Metall zum Beispiel aus Metallwolle bestehen.

Die Erfindung wird nun anhand der beigefügten Zeichnung näher erläutert.

In der Zeichnung zeigt:

Figur 1 ein Klimagerät im Längsschnitt,

Figur 2 das Staubfilter allein in der Ansicht gemäß dem Pfeil II aus Figur 1,

Figur 3 den Staubabscheider allein in der Schnittansicht gemäß dem Pfeil III aus Figur 1,

Figur 4 das Gebläse mit dem Generatorelement gemäß der Schnittansicht IV aus Figur 1,

Figur 5 Teile des Stators des Antriebsmotors des Gebläses mit dem Generatorelement in der Schnittdarstellung gemäß dem Pfeil V aus Figur 1,

Figur 6 das Generatorelement mit dem Stator in der Schnittansicht gemäß dem Pfeil VI aus Figur 1,

Figur 7 ein am druckseitigen Ende angeordnetes Metallgitter in der Ansicht gemäß dem Pfeil VII aus Figur 1,

Figur 8 eine Prinzipschaltung des Ionengenerators,

Figur 9 in der Schnittansicht entsprechend Figur 1 ein zweites Ausführungsbeispiel eines Klimagerätes,

Figur 10 in der Schnittansicht entsprechend Figur 1 ein drittes Ausführungsbeispiel eines Klimagerätes,

Figur 11 den Antriebsmotor mit dem Ionengenerator aus Figur 10, teilweise geschnitten und

Figur 12 im Querschnitt ein Generatorelement,

Figur 13 die Ansicht gemäß dem Pfeil XIII aus Figur 12 und
Figur 14 ein weiteres Generatorelement.

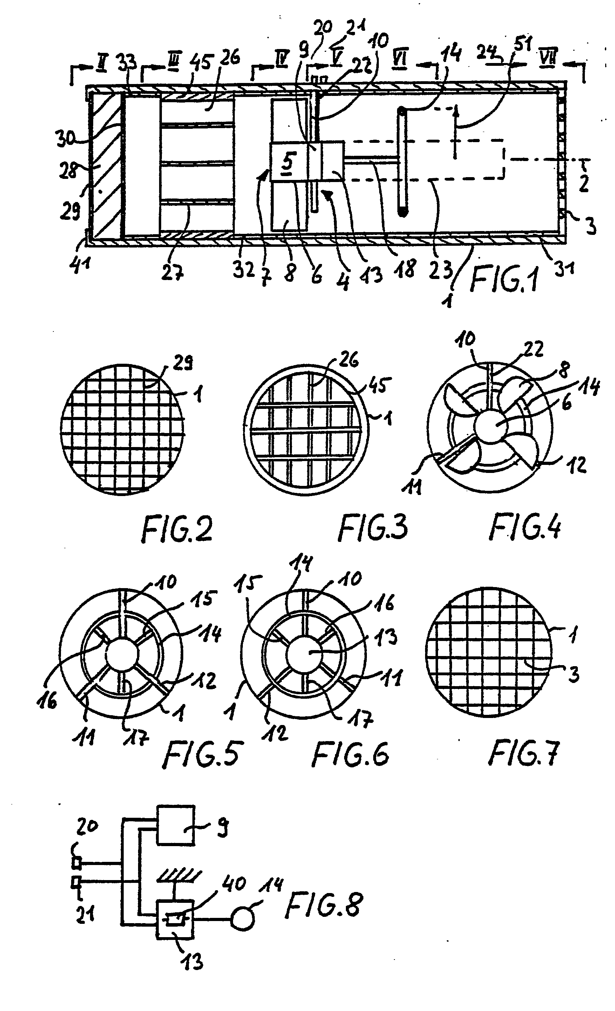

In Figur 1 ist mit 1 ein Metallrohr bezeichnet, das kreisrunden Durchmesser hat und dessen Längsachse mit 2 bezeichnet ist. Das druckseitige Ende des Metallrohrs ist durch metallenes Maschengitter 3 abgeschlossen. In dem Metallrohr ist das mit 4 bezeichnete Axialgebläse koaxial zur Achse 2 angeordnet. Der Antriebsmotor 5 des Gebläses ist ein Außenläufermotor. Der Rotor 6 bildet gleichzeitig die Nabe des Gebläserades 7. Die Gebläseschaufeln 8 sind auf den Umfang verteilt an dem Rotor 6 befestigt. Der Stator 9 des Antriebsmotors 5 ist über drei auf den Umfang verteilt angeordnete Speichen 10, 11, 12 am Rohr 1 befestigt. Am Stator 9 ist ein Ionengenerator 13 befestigt. Zu dem Ionengenerator 13 gehört ein Generatorelement 14, das ringförmig ist und über Speichen 15, 16, 17 an einer Lagerachse 18 befestigt ist. Die Teile sind, bezogen auf ihre Außenkontur, koaxial zur Achse 2 angeordnet und ausgebildet. Der Radius 51 des Generatorelementes 14 ist etwa so groß wie der Radius des mittleren Bereiches der Gebläseschaufeln 8.

Das Generatorelement 14 besteht aus polykristallinen, einphasigen Kohlenstoff-Fasern, die dicht an dicht elektrische Entladungsspitzen bilden, die sich über den ganzen Umfang des Generatorelementes erstrecken. Der Ionengenerator 13 wird elektrisch betrieben, seine Stromversorgung wird von der Stromversorgung des Stators 9 abgegriffen. Die Stromversorgung des Stators erfolgt über äußere elektrische Anschlüsse 20, 21 und ein Kabel 22, das entlang der Speiche 10 verlegt ist.

Statt der äußeren Stromversorgung kann man auch eine Batterie-Stromversorgung vorsehen. Zu diesem Zweck kann man einen Batterie-Kasten, wie durch die strichpunktierte Linie 23 angedeutet, am Stator befestigen. Die Speichen 15, 16, 17 sitzen dann auf einem Batteriekasten, der seinerseits am Stator befestigt ist und die Lagerachse 18 kann entfallen.

Das Gebläse 4 wird mit Blasrichtung gemäß Pfeil 24 betrieben, so daß das Generatorelement 14 druckseitig vom Gebläse angeordnet ist. Sogseitig vom Gebläse, mithin also auch sogseitig vom Generatorelement, ist im Rohr 1 ein Staubabscheider 26 untergebracht, der aus gitterartig angeordneten, flachen Metallstreifen 27 besteht, die mir ihrer Schmalseite gegen die Strömung gerichtet sind und so der Strömung möglichst wenig Widerstand bieten aber eine große Niederschlagsfläche. Sogseitig vor dem Staubabscheider 26 ist ein aus porösem Kunststoff bestehendes Staubfilter 28 angeordnet, das durch zwei Kunststoffgitter 29, 30 beidseitig versteift ist. Die genannten Teile werden innerhalb des Rohrs 1 auf Abstand gehalten durch Abstandshülsen 31, 32, 33. Zur Montage werden die Teile von der Sogseite her in das Rohr eingeführt, zunächst die Abstandshülse 31, dann das Gebläse 4, dann die Abstandshülse 32, dann der Staubabscheider 26, dann die Abstandshülse 33, dann das Staubfilter 28 und dann wird das Kunststoffgitter 29 mit Klammern durch Umbördelung 41 festgelegt.

Der Ionengenerator 13 ist mit einem in Figur 8 angedeuteten hohen Innenwiderstand 40 ausgestattet und hinsichtlich der Stromversorgung elektrisch parallelgeschaltet zum Stator 9 des Antriebsmotors. Das Generatorelement 14 ist an den negativen Hochspannungspol des als Hochspannungsgenerator ausgebildeten Ionengenerators angeschlossen. An den positiven Pol, der gleichzeitig auf Massenpotential liegt, ist das Rohr 1, das metallisch leitend ausgebildet ist, angeschlossen. Metallisch leitend ist auch die Abstandshülse 31 und das Maschengitter 3, die also ebenfalls auf Massenpotential liegen. Die Folge ist, daß durch Dissoziation entstehende positive Ionen sich an der Abstandshülse 31 beziehungsweise dem Maschengitter 3 niederschlagen, während die negativen Ionen durch das Maschengitter 3 hindurch mit der geförderten Luft abgeblasen werden. Der Staubabscheider 26 weist an seinem Umfang eine elektrische Isolierung 45 auf und ist mithin gegenüber dem Rohr 1 elektrisch isoliert. Er ist an Massenpotential angeschlossen, so daß sich die mit negativen Ionen beladenen Staubteilchen in der angesaugten Luft dort niederschlagen. Grobe Staubteilchen werden in dem Staubfilter 28 zurückgehalten.

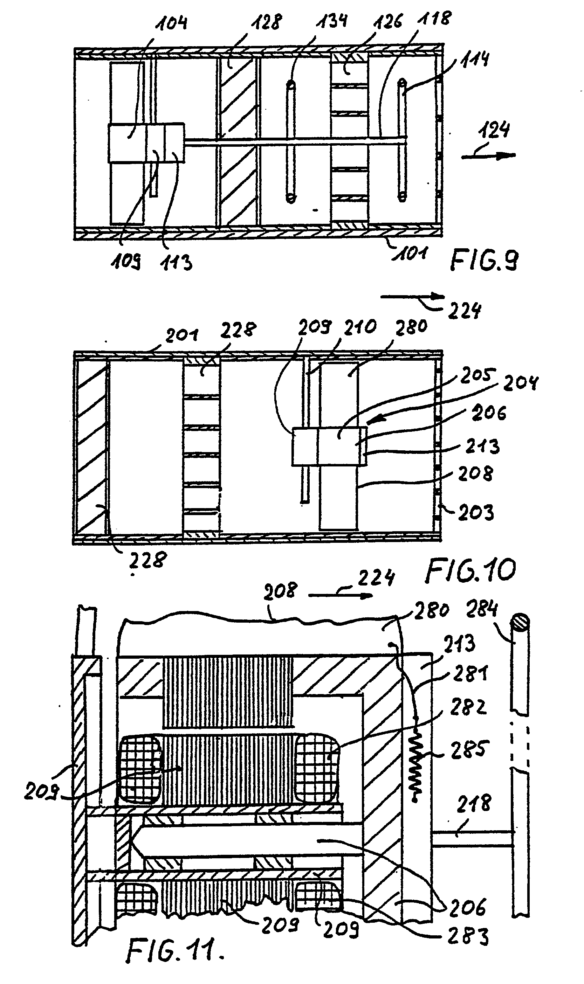

Das in Figur 9 dargestellte Ausführungsbeispiel entspricht weitgehend dem Ausführungsbeispiel aus Figur 1. Einander entsprechende Teile sind mit der gleichen Bezugsziffer wie in Figur 1, vermehrt um 100, bezeichnet. Unterschiedlich ist, daß das Staubfilter 128 und der Staubabscheider 126 auf der Druckseite des Gebläses 104 angeordnet sind. Das ist vorteilhaft für die Förderleistung des Gebläses. Das Generatorelement 114 befindet sich jedoch auch bei diesem Ausführungsbeispiel abströmseitig vom Staubabscheider 126 und vom Staubfilter 128, so daß die mit den vom Generatorelement 114 ausgehenden Ionen beladene Luft das Staubfilter und den Staubabscheider nicht mehr passieren muß. Zusätzlich zu dem Generatorelement 114 ist noch ein zweites Generatorelement 134 vorgesehen, das genauso ausgebildet ist, wie das Generatorelement 114, und zusammen mit diesem an der Lagerachse 118 befestigt ist, die ihrerseits am Stator 109 befestigt ist. Die beiden Generatorelemente sind am negativen Pol des Ionengenerators 113 angeschlossen und die entsprechenden Anschlußleitungen sind an der Lagerachse 118 und in Speichen der betreffenden Generatorelemente 114, 134 verlegt. Das Generatorelement 134 ist auf der zuströmseitigen Seite des Staubabscheiders 126 angeordnet, ionisiert die Luft und damit auch die Staubteilchen, die an den Staubabscheider gelangen, wodurch die Abscheidewirkung begünstigt wird. Negative Ionen, die an dieser Staubabscheidung nicht beteiligt sind, und den Staubabscheider passieren, gelangen in wünschenswerter Weise in die abgeblasene Luft, und verstärken die Wirkung des Generatorelementes 114.

Bei den zuvor beschriebenen Ausführungsbeispielen sind der Ionengenerator und das Generatorelement am Stator des Antriebsmotors befestigt. Bei dem Ausführungsbeispiel nach Figur 10 und 11 sind der Ionengenerator und das Generatorelement am Rotor des Antriebsmotors befestigt. Die sich dadurch ergebenden Probleme der Stromzufuhr zum Ionengenerator werden induktiv gelöst.

Bei dem in Figur 10 dargestellten Ausführungsbeispiel sind Teile, die denen aus Figur 1 entsprechen mit der gleichen Bezugsziffer wie in Figur 1, vermehrt um 200, bezeichnet. Das Gebläse 204 wird von einem Außenläufermotor angetrieben, dessen Außenläuferrotor mit 206 bezeichnet ist. Die an dem Außenläuferrotor befestigten Gebläseschaufeln sind mit 208 bezeichnet. Der Stator 209 ist mit Speichen 210, die auf den Umfang verteilt angeordnet sind, am Rohr 201 befestigt. Der Ionengenerator 213 ist am Rotor 206 befestigt. Als Generatorelement dient eine Beschichtung der Schaufeln 208 mit polykristallinen, einphasigen Kohlenstoff-Fasern, die in Kusntstoff eingebettet sind. Diese Beschichtung ist mit 280 bezeichnet.

Diese Beschichtung ist, wie durch die Leitung 281 in Figur 11 angedeutet, an den negativen Hochspannungsausgangspol des Ionengenerators 213 angeschlossen. Die Stromversorgung des Hochspannungsgenerators 213 erfolgt über eine Induktionsspule 285, die im Ionengenerator gelagert ist und durch Streufeld, das von den Statorspulen 282, 283 ausgeht genügend Strom induziert erhält, um den Ionengenerator 213 mit hinreichendem Strom zu versorgen. Dieser induzierte, abgegriffene Strom wird in nicht dargestellten elektrischen Schaltelementen umgewandelt in eine Hochspannungsgleichspannung, die zur Ionenerzeugung dient. Dafür wird auch bei intensiver Ionisierung nur ein verhältnismäßig kleiner Strom benötigt, so daß die induktive Koppelung durch die Statorspulen 282, 283 einerseits und die Induktionsspule 285 andererseits nicht sehr leistungsstark sein muß. Der Rotor 206 besteht aus nicht magnetisierbarem Material oder hat für die Induktionsspule 285 ein Fenster. Die Schaufeln 208 bestehen aus elektrisch leitendem Material und bilden die elektrische Zuleitung zu den als Generatorelement dienenden Kohlenstoff-Fasern.

Statt das Generatorelement durch eine Beschichtung der Schaufeln zu erzielen, kann man auch bei diesem Ausführungsbeispiel ein Generatorelement der Form, wie in Figur 1 dargesellt, oder ein anderes, vorzugsweise rotationssymmetrisch zur Achse 2 ausgebildetes Generatorelement vorsehen wie das in Figur 11 gestrichelt eingezeichnete Generatorelement 284. Die Stromleitung vom Ionengenerator 213 zu diesem Generatorelement 284 kann dann innerhalb der Lagerachse 218 verlegt sein.

Der Ionengenerator ist bei allen Ausführungsbeispielen eine Hochspannungsquelle, vorzugsweise mit einer Ausgangsgleichsspannung von mehreren tausend Volt.

Die für die Ionisierung aktiven Teile der Generatorelemente 14, 114 und 134 bestehen aus polykristallinen, einphasigen Kohlenstoff-Fasern. Diese Kohlenstoff-Fasern sind dicht an dicht parallel zueinander und im Bündel zu mehreren hundert oder mehreren tausend Fasern in Kunststoff eingebettet. Die Enden dieser hunderte oder tausende Kohlenstoff-Fasern sind abgeschnitten und ragen an den Oberflächen der Generatorelemente, die mit der geförderten Luft in direkten Kontakt geraten, aus dem Kunststoff heraus. Sie bilden so eine Vielzahl von Spitzen, an denen Spitzenentladung stattfinden kann. Die Kohlenstoffenden, die aus dem Kunststoff herausragen sind im Interesse der Spitzenentladung vorzugsweise nicht unmittelbar in elektrischem Kontakt miteinander, sie sind allerdings an den gleichen elektrischen Hochspannungspol angeschlossen, und zwar über ein längeres Stück der jeweils betreffenden Kohlenstoff-Faser.

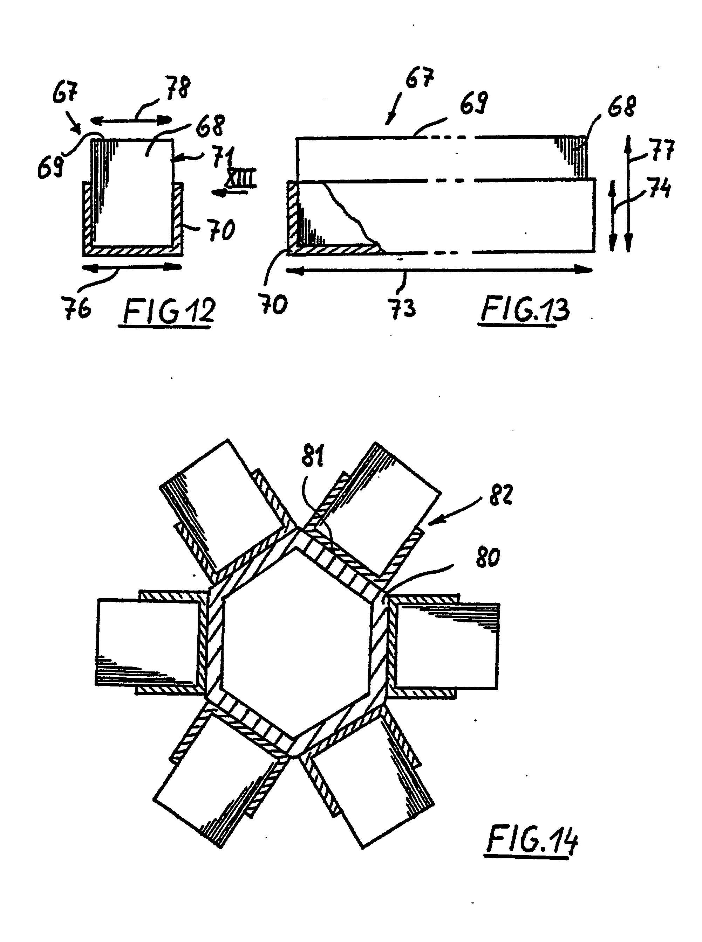

Bei dem in Figur 12 und 13 dargstellten Generatorelement 67 ist mit 70 eine aus Karbon oder aus Metall bestehende Klammer bezeichnet die stabil und selbsttragend ist. In diese Klammer ist ein durchgehendes Büschel 71 von elektrisch leitenden Fasern 68 eingefaßt. Diese Fasern können aus Materialien bestehen, wie sie in den Ansprüchen 4 bis 6 gekennzeichnet sind. Die einzelnen Fasern 68 erstrecken sich längs nebeneinander, sie enden in einer gemeinsamen Stirnfläche 69. Pro Quadratzentimeter Stirnfläche sind 10.000 bis 500.000, vorzugsweise etwa 100.000, Faserenden pro Quadratzentimeter angeordnet. An diesen Faserenden erfolgt Spitzenentladung für die Ionisierung. Die Fasern sind in eine elektrisch isolierende Trägersubstanz, vorzugsweise aus Kunststoff, eingebettet. Aus dieser Trägersubstanz, die in der Zeichnung nicht sichtbar ist, ragen nur die Spitzen beziehungsweise die Enden der Fasern an der Stirnfläche 69 heraus. Ein solches Generatorelement kann beispielsweise folgende Abmessungen haben, Länge gemäß Pfeil 73 fünfhundert Millimeter, Höhe gemäß Pfeil 74 fünf Millimeter, Breite gemäß Pfeil 76 drei Millimeter, Gesamthöhe gemäß Pfeil 77 sieben Millimeter, Büschelbreite gemäß Pfeil 78 zwei Millimeter. Die Generatorelemente können auch noch mit erheblich kleineren Abmessungen hergestellt werden. Das Generatorelement 67 ist stabförmig und selbsttragend. Zwischen der Klammer 70 und sämtlichen Fasern 68 des Büschels 71 besteht elektrisch leitende Verbindung.

Generatorelemente nach Figur 12 und 13 kann man zu mehreren nebeneinander an einer Wand anordnen. Man kann mit solchen Generatorelementen beispielsweise den Außenumfang eines Rohres besetzen, wie das beispielsweise in Figur 14 durch das sechseckige Rohr 80 dargestellt ist, das auf seinen sechs Außenflächen, zum Beispiel der Außenfläche 81 mit je einem Generatorelement 82 nach Figur 6 und 7 besetzt ist. Diese Generatorelemente sind entweder mit einem entsprechend hitzebeständigen Kleber oder durch Verklemmen befestigt. Entsprechend kann auch ein Rohr von innen mit Generatorelementen besetzt sein, deren durch die Faserenden gebildeten Stirnflächen dann radial nach innen ragen. Das Rohr 80 besteht vorzugsweise aus Karbon oder aus Metall.

Generatorelemente, wie sie anhand der Figuren 12 bis 13 beschrieben sind, können in Verbindung mit den Ausführungsbeispielen nach Figur 1 bis 11 eingesetzt werden.

**Patentansprüche**

1. Klimagerät mit einem Gebläse, mit einem Ionengenerator, dessen Generatorele-

ment auf der Druckseite des Gebläses angeordnet ist, dadurch gekennzeichnet, daß das Generatorelement ( 67 ) elektrisch leitende Fasern ( 68 ) aufweist, die büschelartig einzeln längs nebeneinander angeordnet sind, daß die Fasern eines Büschels in einer gemeinsamen freiliegenden Stirnfläche ( 69 ) enden und

daß die Ionisation nach Art einer Spitzenentladung von diesen Faserenden ausgeht.

2. Klimagerät nach Anspruch 1, dadurch gekennzeichnet, daß 10.000 bis 500.000, vorzugsweise etwa 100.000, Faserenden beziehungsweise -spitzen pro Quadratzentimeter in der Stirnfläche ( 69 ) angeordnet sind.

3. Klimagerät nach Anspruch 1 oder 2, dadurch gekennzeichnet, daß die Fasern aus polykristallinem, einphasigem oder mehrphasigem Kohlenstoff bestehen.

4. Klimagerät nach Anspruch 1 oder 2, dadurch gekennzeichnet, daß die Fasern aus Kohlenstoff mit graphitähnlicher Struktur bestehen.

5. Klimagerät nach Anspruch 1 oder 2, dadurch gekennzeichnet, daß die Fasern aus Kunststoff oder Keramik bestehen.

6. Klimagerät nach einem der vorhergehenden Ansprüche, dadurch gekennzeichnet, daß die Fasern, mit Ausnahme der für den Ionisierungskontakt und der elektrischen Anschlüsse erforderlichen Flächen in temperaturbeständigen elektrisch isolierenden Trägersubstanz, vorzugsweise Kunststoff eingebettet sind.

7. Klimagerät nach einem der vorhergehenden Ansprüche, dadurch gekennzeichnet, daß der druckseitige Strömungskanal in ein Rohr ( 1 ) eingefasst ist, das als Elektrode ausgebildet und gegenüber dem Generatorelement ( 14 ) elektrisch gegenpolig vorgespannt ist, und daß am druckseitigen Ende des Rohres ( 1 ) ein mit dem Rohr elektrisch leitendes verbundenes Metallgitter ( 3 ) angeordnet ist, das die Strömung möglichst wenig behindert.

8. Klimagerät nach einem der vorhergehenden Ansprüche, dadurch gekennzeichnet, daß der Antriebsmotor ( 5 ) des Gebläses ( 4 ) mit zur Druckseite weisendem Stator ( 9 ) angeordnet ist,

daß der Ionengenerator ( 13 ) und das Generatorelement ( 14 ) am Stator befestigt ist, und daß die Stromversorgung für den Ionengenerator von der Stromversorgung des Antriebsmotors abgezweigt wird.

9. Klimagerät nach einem der Ansprüche 1 bis 6, dadurch gekennzeichnet, daß der Antriebsmotor ( 205 ) des Gebläses ( 204 ) mit zur Sogseite weisendem Stator ( 209 ) angeordnet ist,

daß der Ionengenerator ( 213 ) und das Generatorelement ( 280 ) am Rotor ( 206 ) befestigt ist, und daß die Stromversorgung für den Ionengenerator induktiv über am Rotor angeordnete Induktionsspulen ( 285 ) von den Induktionsspulen ( 282, 283 ) des Stators abgenommen wird.

10. Klimagerät nach einem der vorhergehenden Ansprüche, dadurch gekennzeichnet, daß die Gebläseschaufeln ( 208 ) durch Beschichtung ( 280 ) als Generatorelement ausgebildet sind.

## Claims

1. Air conditioning unit with a blower, having an ion generator, whose generator element is arranged on the pressure side of the blower, characterized in that the generator element (67) has electrically conductive fibres (68), which are longitudinally juxtaposed in individual bunch-like manner, that the fibres of a bunch terminate in a common exposed face (69) and that the ionization emanates in the manner of a point discharge from said fibre ends.

2. Air conditioning unit according to claim 1, characterized in that there are 10,000 to 500,000 and preferably approximately 100,000 fibre ends or tips per cm$^2$ in face (69).

3. Air conditioning unit according to claims 1 or 2, characterized in that the fibres are made from polycrystalline, single-phase or multiphase carbon.

4. Air conditioning unit according to claims 1 or 2, characterized in that the fibres comprise carbon with a graphite-like structure.

5. Air conditioning unit according to claims 1 or 2, characterized in that the fibres are made from plastic or ceramic.

6. Air conditioning unit according to one of the preceding claims, characterized in that the fibres, with the exception of the faces required for ionizing contact and electrical connections, are embedded in heat-resistant, electrically insulating carrier material, preferably plastic.

7. Air conditioning unit according to one of the preceding claims, characterized in that the pressure-side flow channel is enclosed in a pipe (1), which is constructed as an electrode and is electrically biased in antipole manner with respect to the generator element (14) and that at the pressure-side end of pipe (1) is provided a metal grating (3) electrically conductively connected to the pipe and which impedes the flow to the minimum possible extent.

8. Air conditioning unit according to one of the preceding claims, characterized in that the drive motor (5) of blower (4) is positioned with the stator (9) directed towards the pressure side, that the ion generator (13) and generator element (14) is fixed to the stator and that the power supply for the ion generator is branched from the drive motor power supply.

9. Air conditioning unit according to one of the claims 1 to 6, characterized in that the drive motor (205) of blower (204) is positioned with the stator (209) directed towards the suction side, that the ion generator (213) and generator element (280) are fixed to the rotor (206) and that the power supply for the ion generator is taken inductively via induction coils (285) arranged on the rotor from the induction coils (282, 283) of the stator.

10. Air conditioning unit according to one of the preceding claims, characterized in that the blower blades (208) are constructed as a generator element through coating (280).

## Revendications

1. Appareil de climatisation comprenant un ventilateur et un générateur d'ions dont l'élément générateur est disposé du côté du refoulement du ventilateur,
caractérisé par le fait que l'élément générateur (67) comporte des fibres conductrices de l'électricité (68) qui sont disposées individuellement en faisceau les unes à côté des autres dans le sens longitudinal,
par le fait que les fibres d'un faisceau se terminent dans une surface frontale libre et commune (69), et
par le fait que l'ionisation part de ces extrémités de fibres à la manière d'une décharge par effet de pointes.

2. Appareil de climatisation selon la revendication 1, caractérisé par le fait que de 10.000 à 500.000 extrémités ou pointes de fibres, respectivement, et de préférence 100.000 environ, sont disposées par centimètre carré de la surface frontale (69).

3. Appareil de climatisation selon la revendication 1 ou 2, caractérisé par le fait que les fibres sont en carbone polycristallin à une seule phase ou à plusieurs phases.

4. Appareil de climatisation selon la revendication 1 ou 2, caractérisé par le fait que les fibres sont en carbone à structure analogue à celle du graphite.

5. Appareil de climatisation selon la revendication 1 ou 2, caractérisé par le fait que les fibres sont en matière plastique ou en céramique.

6. Appareil de climatisation selon l'une des revendications précédentes, caractérisé par le fait que les fibres, à l'exception des surfaces nécessaires pour le contact d'ionisation et pour les raccordements électriques, sont noyées dans une substance porteuse électriquement isolante et résistante à la chaleur, de préférence en matière plastique.

7. Appareil de climatisation selon l'une des revendications précédentes, caractérisé:
par le fait que le canal d'écoulement du côté du refoulement est inséré dans un tube (1) qui est réalisé sous la forme d'une électrode et qui est soumis à une tension préalable de polarité électrique opposée à celle de l'élément générateur (14), et
par le fait qu'à l'extrémité du tube (1) qui est située du côté du refoulement est disposée une grille métallique (3) qui est reliée au tube de manière conductrice de l'électricité et qui gêne l'écoulement aussi peu que possible.

8. Appareil de climatisation selon l'une des revendications précédentes, caractérisé:
par le fait que le moteur d'entraînement (5) du ventilateur (4) est disposé avec son stator (9) dirigé vers le côté du refoulement,
par le fait que le générateur d'ions (13) et l'élément générateur (14) sont fixés au stator, et
par le fait que l'alimentation en courant du générateur d'ions est prélevée par branchement sur l'alimentation en courant du moteur d'entraînement.

9. Appareil de climatisation selon l'une des revendications 1 à 6, caractérisé:
par le fait que le moteur d'entraînement (205) du ventilateur (204) est disposé avec son stator (209) dirigé vers le côté de l'aspiration,
par le fait que le générateur d'ions (213) et l'élément générateur (280) sont fixés au rotor (206), et
par le fait que l'alimentation en courant du générateur d'ions est prise par induction aux bobines d'induction (282, 283) du stator par l'intermédiaire de bobines d'induction (285) disposées sur le rotor.

10. Appareil de climatisation selon l'une des revendications précédentes, caractérisé par le fait que les pales (208) du ventilateur sont réalisées sous la forme d'un élément générateur par revêtement (280).

FIG.1

FIG.2

FIG.3

FIG.4

FIG.5

FIG.6

FIG.7

FIG.8

FIG.9

FIG.10

FIG.11.

*FIG 12*

*FIG.13*

*FIG.14*